# EUROPÄISCHE PATENTSCHRIFT

(11) **EP 0 849 129 B1**
(45) Veröffentlichungstag und Bekanntmachung des Hinweises auf die Patenterteilung: **16.06.2004**
(21) Anmeldenummer: 97119353.7
(22) Anmeldetag: 05.11.1997
(51) Int. Cl.: B60R 21/22, B60R 21/24, B60R 21/26

(54) **Seitenairbagsystem für ein Kraftfahrzeug**
Side air bag system for a motor vehicle
Système de coussin gonflable latéral pour véhicule automobile

(30) Priorität: 21.12.1996 DE 19653875
(43) Veröffentlichungstag der Anmeldung: 24.06.1998
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)
(74) Vertreter: Liebl, Thomas, Dipl.-Ing.

(56) Entgegenhaltungen:
- EP-A- 0 694 444
- WO-A-93/09977
- DE-A- 4 041 049
- DE-A- 4 231 522
- DE-A- 4 307 175
- DE-A- 4 337 656
- DE-A- 19 541 513
- DE-U- 29 614 201
- GB-A- 1 381 999
- GB-A- 2 297 950

## Beschreibung

Die Erfindung betrifft ein Seitenairbagsystem für ein Kraftfahrzeug nach dem Oberbegriff des Anspruchs 1.

Seitenairbagsysteme, die im Crashfall aktiviert werden und im Bereich zwischen einem Fahrzeuginsassen und der benachbarten Fahrzeugtür oder Seitenwand ein Polster zwischen dem Fahrzeuginsassen und dem jeweiligen Fahrzeugbereich ausbilden, sind bekannt. Sie werden üblicherweise im Dachrahmenbereich angeordnet und nehmen im nicht aktivierten Zustand nur sehr wenig Platz ein.

Seitenschutzeinrichtungen sind aus der US-PS 28 34 606 sowie aus der US-PS 38 97 961 bekannt. Die erstgenannte Schrift beschreibt oberhalb jedes Seitenfensters in Längsrichtung des Fahrzeuges angeordnete, im Ausgangszustand zusammengefaltete Airbags, die sich bei einem Crash in Richtung nach unten bis in Positionen neben den Füßen des Fahrzeuginsassen ausdehnen. Gegenstand der US-PS 38 97 961 sind sogenannte aufblasbare Seitenvorhänge, die sich im aktivierten Zustand von einem Dachrahmenbereich her nach unten bis unterhalb der Höhe der Brüstung der betreffenden Seitentür erstrecken. Diese Vorhänge sind durch senkrecht verlaufende Nähte gleichsam in mehrere Airbags unterteilt.

Auch die DE-OS 15 551 42 beschreibt einen Insassen-Seitenschutz mit mehreren, an der Oberkante eines Fensters befestigten aufblasbaren Schutzelementen, die im Crashfall eine seitliche Sicherheitswand bilden.

Die US-PS 49 66 388 wiederum hat einen airbagbestückten Insassen-Seitenschutz zum Gegenstand, der im Ruhezustand in einer Fahrzeugtür untergebracht ist und bei Aktivierung aus einer dann öffnenden Klappe in Richtung nach oben austritt; mittels Klettverschlüssen soll er sich dann selbsttätig an einem Dachrahmenbereich und an den dem jeweiligen Fenster benachbarten senkrechten Fenstersäulen des Fahrzeugs halten. Die Ausdehnungsbewegung des Airbags von unten nach oben ist jedoch insofern nachteilig, als der Fahrzeuginsasse sich häufig mit einem Arm auf einer Armlehne oder - insbesondere bei geöffnetem Seitenfenster - auf der Türbrüstung abstützt, so dass der Ausdehnungsweg des Airbags nicht frei ist.

Bei den vorstehend aufgeführten Seitenairbagsystemen nimmt das im Crashfall durch die Airbags gebildete Polster eine undefinierte Stellung und Form ein.

Aus der gattungsgemäßen DE 43 07 175 A1 ist ein Seitenairbagsystem für ein Kraftfahrzeug mit wenigstens einem in einem Dachrahmen- und/oder Fenstersäulenbereich eines Kraftfahrzeugs oberhalb eines Seitenfensters angeordneten und dort im desaktivierten Zustand zusammengelegt untergebrachten Airbag bekannt, der sich im aktivierten Zustand als von dem Dachrahmen- und/oder Fenstersäulenbereich ausgehende Abdeckung vor dem Seitenfenster erstreckt und der an einem im Querschnitt durch den Airbag gesehen in einem dem Dachrahmen- und/oder Fenstersäulenbereich zugeordneten Randbereich einen Ansatz zum Abdecken des Dachrahmen- und/oder Fenstersäulenbereichs oder von am Dachrahmen- und/oder Fenstersäulenbereich angeordneten und in das Fahrzeuginnere vorstehenden Halte- und Bedienelementen aufweist, wobei der Ansatz an einem im Querschnitt durch den Airbag gesehen im Fahrzeuginnenraum zugewandten Endbereich des Randbereichs vorgesehen ist.

Konkret ist hier ein im Querschnitt U-förmig ausgebildeter oberster Airbag vorgesehen, der den Dachrahmen in einer Anlageverbindung abdeckt. Mit einer derartigen Anordnung ist zwar eine Abdeckung eines Dachrahmenbereichs möglich, wobei sich jedoch insbesondere mit in das Fahrzeuginnere vorstehenden Halte- und Bedienelementen Probleme ergeben, da hier die Gefahr besteht, dass diese ein Entfalten des Airbags und damit seine Funktionssicherheit behindern oder beeinträchtigen können.

Die Airbags sind zudem jeweils mit einem individuellen Gasgenerator verbunden, so dass dieser airbagbestückte Insassen-Seitenschutz (Seitenairbagsystem) so viele Gasgeneratoren aufweist wie er Airbags hat, wobei die Aktivierung der Gasgeneratoren gleichzeitig, aber auch zeitlich aufeinanderfolgend ausgelöst werden kann. Im aufgeblasenen Zustand überdecken die Airbags den kopfnahen Bereich der Seitenwand des Kraftfahrzeugs. Wegen der der Zahl der Airbags entsprechenden Anzahl einzusetzender Gasgeneratoren ist die Lösung jedoch aufwendig.

Aufgabe der Erfindung ist es daher, ein alternatives Seitenairbagsystem für ein Kraftfahrzeug zu schaffen, mit dem ein guter Aufprallschutz im Dachrahmen- und/oder Fenstersäulenbereich, insbesondere auch in Verbindung mit in das Fahrzeuginnere vorstehenden Halte- und Bedienelementen möglich ist.

Diese Aufgabe wird gelöst mit de Merkmalen des Patentanspruchs 1. Weitere vorteilhafte Ausgestaltungen sind Gegenstand der Unteransprüche.

Besonders vorteilhaft wird somit hier der Airbag im Volumen also nur dort vergrößert, wo es sicherheitstechnisch unbedingt notwendig ist, nämlich im Randbereich des Airbags. Insgesamt können deshalb hier bei relativ kleinen Füllvolumina gut vertretbare Sicherheitsstandards erreicht werden, wobei insbesondere in Verbindung mit vorstehenden Halte- und Bedienelementen, wie beispielsweise Handgriffen, Kleiderhaken, Gurt, Umlenkbeschlägen oder dergleichen eine gezielte Überdeckung mittels dem - beispielsweise wulstförmig ausgebildeten - Ansatz erreicht wird.

Die Airbags können jeweils über ein Ventil mit einem Gasleitkanal verbunden sein, der im Dachrahmen- und Fenstersäulenbereich angeordnet ist und der im Crashfall mit Gas befüllt wird, wobei die Ventile unabhängig voneinander steuerbar sind. Umfasst sind ausdrücklich auch Airbaganordnungen, bei denen einzelne oder mehrere Gaskissen mit einem Spanntuch in Verbindung stehen, das sich beispielsweise zwischen A- und B-Säule oder A- und C-Säule erstreckt und gegebenenfalls selbst aufblasbar ist.

Es ist vorteilhaft, in diesem Fall den Gasleitkanal durch zwei Gasgeneratoren oder mittels eines Stufengenerators gleichzeitig oder zeitlich versetzt zu beblasen, da dadurch die Zuverlässigkeit, insbesondere in Verbindung mit der gesteuerten Befüllung der einzelnen Airbags, erhöht wird und an jedem Airbag unmittelbar nach der Auslösung der Gasgeneratoren Gas ausreichenden Druckes zur Verfügung steht.

Diese Anordnung ist mit dem Vorteil verbunden, dass die Anzahl der zum Beblasen der Airbags notwendigen Gasgeneratoren auf einen oder zwei beschränkt ist und dennoch eine optimale Schutzwirkung erreicht wird, indem die Airbags in der der Situation entsprechenden Reihenfolge, d. h. in Abhängigkeit von der im Crashfall gegebenen Sitzposition des Fahrzeuginsassen oder auch vom Kollisionsverlauf her, beblasbar sind. Somit kann der oder können die Airbags vorrangig aufgeblasen werden, bei denen der Insasse zuerst mit einem Köperteil, insbesondere dem Kopf, auftreffen wird. Damit steht auch die gesamte durch die Gasgeneratoren erzeugte Gasmenge für den oder die zuerst zu befüllenden Airbags zur Verfügung, was deren Aufblasen beschleunigt. Einmal in einen Airbag geblasenes Gas kann nicht mehr entweichen, da das diesem zugeordnete Ventil bei einem Druckanstieg im Airbag infolge einer äußeren Beaufschlagung gegenüber dem Gasleitkanal schließt und das Gas im Airbag mit erhöhtem Druck verbleibt und infolge der begrenzten Größe des Airbags in diesem nur begrenzt verdrängbar ist.

Die Steuerung der Ventile erfolgt in Abhängigkeit von Signalen entsprechend angeordneter Sensoren über eine elektronische Steuereinheit. Da eine derartige Steuerung dem Fachmann grundsätzlich bekannt und nicht Gegenstand der Erfindung ist, wird auf diese nicht näher eingegangen.

Die Ventile können vorsteuerbare Rückschlagventile sein, deren Öffnung - oder auch deren Schließung - durch eine Vorsteuerung verhindert und dadurch auch verzögert werden kann.

Von hervorgehobener Bedeutung ist auch die Steuerung der Ventile in Abhängigkeit von der Art des Unfallereignisses. Wird beispielsweise durch ein entsprechend ausgelegtes Sensorsystem ein Fahrzeugüberschlag erkannt, erfolgt eine Befüllung derart, dass relativ große Standzeiten erreicht werden und überdies die gezielte aufgeblasenen Kammern Beiträge zur Energieabsorption gegenüber Insassenaufprallkräften leisten können. Zur Einstellung vorgegebener Füllcharakteristika sind bei einem bevorzugten Ausführungsbeispiel innerhalb des Gasleitkanals Strömungsleitkörper, beispielsweise nach Art einer Rampe oder Schaufel, angeordnet, die bezüglich ihrer Anstellwinkel und/oder Durchströmquerschnitte ebenfalls elektronisch ansteuerbar sein können.

Die Airbags sind vorteilhaft zusammenhängend ausgebildet, wobei benachbarte Airbags eine gemeinsame Wand aufweisen, so dass sich eine geschlossene Abdeckung zwischen dem Fahrzeuginsassen und dem jeweiligen Seitenfesterbreich ergibt. Es läge somit also ein Mehrkammer-Seitenwandairbag vor. Diese Abdeckung kann an jeder Stelle zu einer Polsterung gleicher oder unterschiedlicher Dicke ausgebildet sein, nämlich wenn alle Airbags mit Gas befüllt sind, oder es kann in Abhängigkeit von der Position des Fahrzeuginsassen nur ein vorbestimmter Bereich dieser Abdeckung zu einem Polster aufgeblasen sein. Diese im aktivierten Zustand zusammenhängende Abdeckung lässt sich in bekannter Weise (DE 43 07 175 A1) in definierter Position anordnen.

Zweckmäßig ist es auch, wenn die Airbags im aufgeblasenen Zustand mit ihrer Längsachse im Wesentlichen vertikal ausgerichtet sind und ein vor der Fenstersäule angeordneter Airbag mit dieser über eine Führung nach Art einer Rollenführung verbunden ist. Dadurch wird die Abdeckung bereits während des Aktiviervorganges an der dem Insassen benachbarten Fenstersäule arretiert und gegen Horizontalbewegungen parallel zur Ebene des Fensters gesichert. Eine Abdeckung mit vertikaler Ausrichtung der Airbags ist überdies einfacher ausführbar als eine Abdeckung mit anderer Ausrichtung der Airbags, da die Fahrzeuge mit weiteren, eine andere Anordnung und vor allem Entfaltung erschwerender Sicherheitseinrichtungen (z. B. Sicherheitsgurt) im Fenstersäulenbereich ausgestattet sind.

Das Seitenairbagsystem kann derart angelegt sein, dass der Gasleitkanal im Dachrahmenbereich installiert und bereits im desaktivierten Zustand vorhanden ist. Ein derartiger Gasleitkanal erleichtert die Ventilanordnung und Ventilansteuerung und erhöht die Zuverlässigkeit des Gesamtsystems. Der Gasleitkanal kann jedoch auch ein quer zu den die Abdeckung bildenden und sich vertikal entfaltenden Airbags angeordneter Airbag sein, der erst durch die Auslösung der Gasgeneratoren aufgeblasen wird.

Die Lösungsvariante gemäß Anspruch 11 beruht auf der erfinderseitigen Überlegung, dass bereits vor vollständiger Befüllung der Airbags der schnelle Aufbau einer ersten Schutzwand von Vorteil sein kann, wenn beispielsweise vor dem Unfall die Seitenfenster bereits geöffnet waren oder zeitgleich mit der Airbagaktivierung durch äußere Beschädigungseinflüsse die Scheiben zerbrechen. Das die Schutzwand bildende Spanntuch ist in einer bevorzugten Ausführungsform ebenfalls nach Art eines schmalwandigen Matratzenairbags gestaltet und ist mit den Kammern des Einzelairbags bzw. den mehreren nebeneinander angeordneten Airbags in der Weise wirkverbunden, dass es für diese vornehmlich als Rückhalte- und Energieabsorptionskissen ausgelegten Komponenten gleichsam eine Ausziehhilfe und/oder ein Stützfundament bildet.

Die Erfindung wird nachstehend anhand eines Ausführungsbeispiels erläutert. In der zugehörigen Zeichnung zeigen schematisch:
- Fig. 1: ein aktiviertes Seitenairbagsystem im Seitenfensterbereich eines Personenkraftwagens,
- Fig. 2: dieses Seitenairbagsystem im Schnitt (II-II) und
- Fig. 3: dieses Seitenairbagsystem im desaktivierten Zustand im Schnitt II-II,
- Fig. 4: eine weitere Erfindungsvariante mit einem Spanntuch als Ausziehhilfe und/oder Stützelement für Airbags.

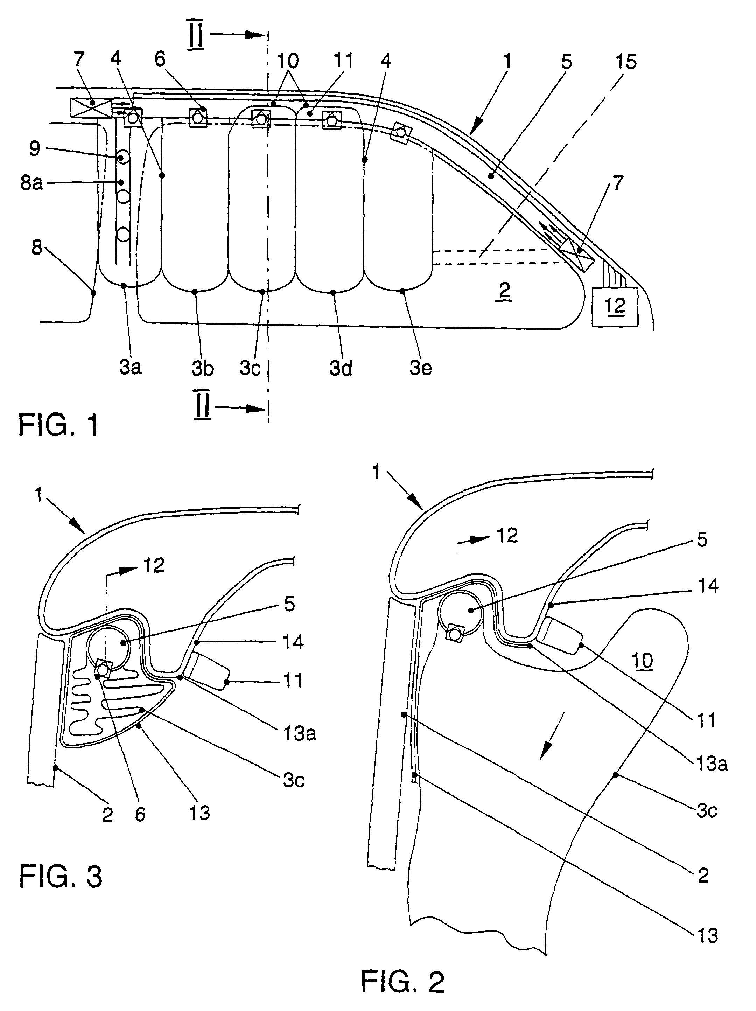

In Fig. 1 ist ein im Dachrahmen- und Fenstersäulenbereich 1 eines Personenkraftwagens oberhalb eines Seitenfensters 2 angeordnetes und aufgeblasenes erfindungsgemäßes Seitenairbagsystem dargestellt. Dieses besteht hier aus fünf nebeneinander angeordneten Airbags 3a bis 3e, die zusammenhängend bevorzugt so ausgebildet sind, dass z. B. auch eine Abspannung zwischen wenigstens zwei vertikalen Säulen des Fahrzeugaufbaus erzeugbar ist, wobei jeweils benachbarte Airbags, beispielsweise 3a und 3b oder 3d und 3e, eine gemeinsame Seitenwand 4 aufweisen. Die Airbags 3a bis 3e sind an einem fest im Dachrahmen- und Fenstersäulenbereich 1 ausgebildeten Gasleitkanal 5 angeordnet und mit diesem jeweils über ein Rückschlagventil 6 verbunden. An beiden Enden des Gasleitkanals 5 ist ein Gasgenerator 7 angeordnet. Ebenso ist aber auch ein Ansatz 10 an allen Airbags 3a bis 3e denkbar, so dass die Gesamtheit aller Ansätze, die gegebenenfalls auch im aufgeblasenen Zustand eine gemeinsame Kammer bilden können, den gesamten Dachrahmenbereich bedecken. Die Airbags 3a bis 3e sind im dargestellten aufgeblasenen Zustand vertikal ausgerichtet. Der im Bereich der Fenstersäule 8 aufgeblasenen Airbag 3a ist an dieser über in einer vertikalen Führungsnut 8a angeordnete Rollen 9 oder beispielsweise auch über Seile/Bänder (nicht dargestellt) geführt und somit in horizontaler Richtung festgelegt. Hier sind zwei der Airbags (3c und 3d) mit Ansätzen 10 zum Abdecken des am Dachrahmen 1a angeordneten und gestrichelt dargestellten Haltegriffs 11 versehen, wie insbesondere aus dem in Fig. 2 dargestellten Schnitt II-II der Fig. 1 zu erkennen ist. Bei einer besonders vorteilhaften Weiterbildung der Erfindung sind die Rückschlagventile 6 mit einer elektronischen Steuereinheit 12 verbunden und durch diese unabhängig voneinander steuerbar. Mit Strichlinien ist in Fig. 1 eine Halteband 15 bezeichnet, welches nach Art einer Führung für eine Orientierung der Airbagentfaltung entlang der Fensterscheiben/Seitenwand des Fahrzeuges sorgt.

Fig. 3 zeigt das Seitenairbagsystem im Schnitt (II-II) im desaktivierten Zustand. Die Sollbruchstelle 13a der Verkleidung 13 ist an der am Dachrahmen 1a angeordneten Sicke 14 ausgebildet.

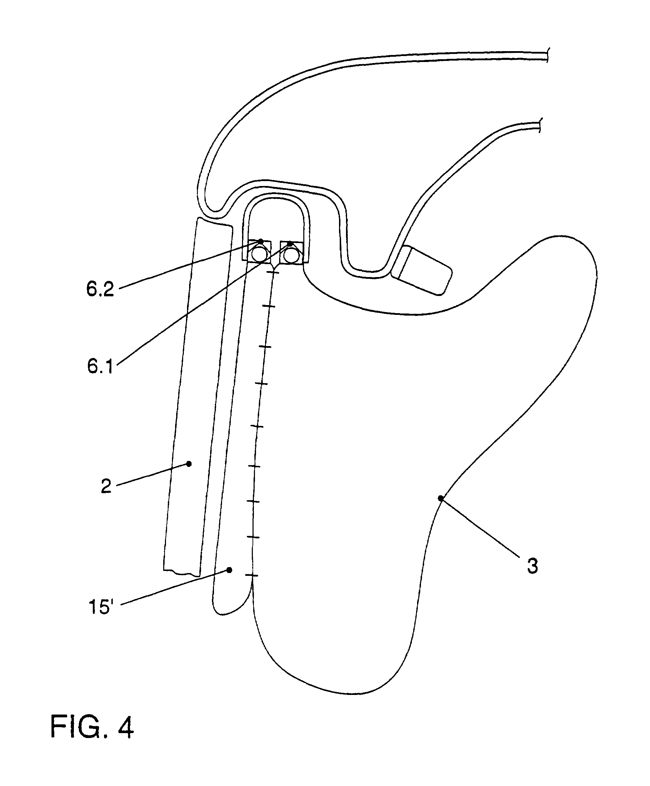

Das Ausführungsbeispiel in Fig. 4 zeigt ein kissenartiges Spanntuch 15', das vor oder zeitgleich mit dem Airbag 3 über das Rückschlagventil 6.1 aktivierbar ist. Mit hier nicht weiter bezifferten Nähten ist das Spanntuch 15' in der Weise mit dem Airbag 3 verbunden, dass es diesen vor der eigentlichen Füllung bereits auszieht und auch während und nach dessen Füllung noch abstützt.

Bei einem Seitenaufprall werden die beiden Gasgeneratoren 7 gezündet und beblasen von beiden Seiten her den Gasleitkanal 5, so dass jedem Rückschlagventil 6 der gleiche Gasdruck anliegt. Gleichzeitig wird durch entsprechende Sensoren (nicht dargestellt) die Position des Insassen signalisiert, und es werden, wenn dieser in normaler Sitzposition befindlich ist, die Rückschlagventile der Airbags 3d und 3e verzögert geöffnet und die Airbags 3a bis 3c beschleunigt aufgeblasen, da die gesamte Gasmenge zunächst für diese zur Verfügung steht. Erreicht der Gasdruck in dem jeweiligen aufgeblasen Airbag 3a bis 3c den im Gasleitkanal 5 herrschenden Gasdruck, schließt das jeweiligen Rückschlagventil 6, und das in diesem Airbag befindliche Gas kann nicht mehr entweichen, auch wenn beispielsweise der Kopf des Fahrzeuginsassen an den Airbag schlägt. Damit ist eine stabile und, durch die Fixierung des Airbags 3a an der Fenstersäule 8 bedingt, auch definiert fixierte Abdeckung des Seitenfesterbereiches des Personenkraftwagens gegeben. Der Insasse wird wirksam zurückgehalten und durch gezielte Energieumwandlung vor Verletzungen geschützt. Befindet sich der Insasse out-of-position, so werden entsprechend andere Airbags, beispielsweise die Airbags 3c bis 3e bevorzugt aufgeblasen (Fig. 1).

Anstelle der hier beschriebenen Gasgeneratoren sind auch sogenannte Stufengeneratoren verwendbar, deren einzelne Zündstufen und die darin jeweils frei gesetzten Gasvolumina dem jeweiligen Unfallereignis entsprechend hinsichtlich zeitlicher Abfolge und Einstellung bestimmter Füllcharakteristika von der elektronischen Steuereinheit 12 beeinflussbar sind.

## Patentansprüche

1. Seitenairbagsystem für ein Kraftfahrzeug mit wenigstens einem in einem Dachrahmen- und/oder Fenstersäulenbereich (1) des Kraftfahrzeugs oberhalb eines Seitenfensters (2) angeordneten und dort im desaktivierten Zustand zusammengelegt untergebrachten Airbag (3a bis 3e; 3), der sich im aktivierten Zustand als von dem Dachrahmen- und/oder Fenstersäulenbereich (1) ausgehende Abdeckung vor dem Seitenfenster (2) erstreckt und der an einem im Querschnitt durch den Airbag gesehen in einem dem Dachrahmen bereich (1) zugeordneten Randbereich, der sich vom Seitenfenster (2) weg in Fahrzeugquerrichtung in den Fahrzeuginnenraum erstreckt, einen Ansatz (10) zum Abdecken des Dachrahmenbereichs (1) oder von am Dachrahmen- und/oder Fenstersäulenbereich (1) angeordneten und in das Fahrzeuginnere vorstehenden Halte- und Bedienelementen (11) aufweist, wobei der an einem im Querschnitt durch den Airbag gesehen dem Fahrzeuginnenraum zugewandte Endbereich des Randbereichs als Ansatz (10) ausgebildet ist,
**dadurch gekennzeichnet,**
**dass** der wenigstens eine Airbag (3a bis 3e; 3) im aufgeblasenen Zustand im Querschnitt durch den Airbag gesehen im dem Dachrahmenbereich (1) zugeordneten Randbereich im Bereich der Halte- und Bedienelemente (11) breiter ausgebildet ist als im sich daran vom Randbereich weg nach innen hin anschließenden Airbagbereich, und
**dass** an diesem im Querschnitt durch den Airbag gesehen breiter. ausgebildeten Randbereich des wenigstens einen Airbags (3) oder im Falle mehrerer Airbags an vorbestimmten Airbags (3c, 3d) vorstehende Halte - und Bedienelemente durch der in den Airbag eingebrachten wulstförmig ausgebildeten Ansatz (10) überdeckt sind.

2. Seitenairbagsystem für ein Kraftfahrzeug nach Anspruch 1, **dadurch gekennzeichnet, dass** der Airbag (3c, 3d; 3) im Bereich der randseitigen Airbagverbreiterung zusammen mit dem Ansatz (10) im aktivierten Zustand den Dachrahmen- und/oder Fenstersäulenbereich (1) in etwa U-förmig umgreift.

3. Seitenairbagsystem nach Anspruch 1 oder Anspruch 2, **dadurch gekennzeichnet, dass** der Ansatz (10) im aktivierten Zustand in etwa parallel zum Wandbereich des zugeordneten Dachrahmen- und/oder Fenstersäulenbereich (1) verläuft unter Ausbildung eines kanalförmigen Zwischenraumes zwischen dem Dachrahmen- und/oder Fenstersäulenbereich (1) und dem Ansatz (10), in dem dachrahmen- und/oder fenstersäulenseitig die Halte- und Bedienelemente (11) angeordnet sind.

4. Seitenairbagsystem nach einem der Ansprüche 1 bis **3, dadurch gekennzeichnet, dass** der Airbag (3) als Einzelkammerairbag mit einem durchgehenden Ansatz (10) ausgebildet ist.

5. Seitenairbagsystem nach einem der Ansprüche 1 bis 4, **dadurch gekennzeichnet, dass** mehrere zusammenhängende Airbags (3a bis 3e) als Airbagkammern vorgesehen sind, wobei an wenigstens einem der Airbags (3c, 3d) ein Ansatz (10) ausgebildet ist.

6. Seitenairbagsystem nach einem der Ansprüche 1 bis 5, **dadurch gekennzeichnet, dass** der wenigstens eine Airbag (3a bis 3e) im aufgeblasenen Zustand in etwa vertikal ausgerichtet ist und ein vor der Fenstersäule angeordneter Airbag (3a) mit dieser über eine Führung (8a) nach Art einer Rollenführung (8a; 9), Seilführung oder Haltebandführung (15) verbunden ist.

7. Seitenairbagsystem nach einem der Ansprüche 1 bis 6, **dadurch gekennzeichnet, dass** einzelne Kammern des Airbags (3) oder die Airbags (3a bis 3e) jeweils über ein Ventil (6; 6.1, 6.2) unmittelbar mit einem im Dachrahmen- oder Fenstersäulenbereich (1) angeordneten und von wenigstens einem Gasgenerator (7) beblasbaren Gasleitkanal (5) verbunden und mit Gas befüllbar sind, und
dass die Ventile (6; 6.1, 6.2) mit einer elektronischen Steuereinheit (12) verbunden und durch diese unabhängig voneinander steuerbar sind.

8. Seitenairbagsystem nach Anspruch 7, **dadurch gekennzeichnet, dass** die Ventile (6; 6.1, 6.2) vorsteuerbare Rückschlagventile sind.

9. Seitenairbagsystem nach Anspruch 7 oder Anspruch 8, **dadurch gekennzeichnet, dass** ein Gasleitkanal (5) fest im Dachrahmen- und/oder Fenstersäulenbereich (1) angeordnet ist.

10. Seitenairbagsystem nach Anspruch 9, **dadurch gekennzeichnet,**
**dass** der wenigstens eine Airbag (3a bis 3e) im desaktivierten Zustand zusammengefaltet in einem dachrahmen- und/oder fenstersäulenseitigen Aufnahmeraum einliegt, der mittels eines Verkleidungsteils (13) abgedeckt ist, das eine Sollbrauchstelle (13a) aufweist dergestalt,
**dass** die Sollbrauchstelle (13a) durch den sich aufblasenden Airbag (3a bis 3e) zur Freigabe einer Airbagaustrittöffnung aufreißbar ist.

11. Seitenairbagsystem nach einem der Ansprüche 1 bis 10, **dadurch gekennzeichnet dass** der oder die Airbags (3) mit einem Spanntuch (15') wirkverbunden sind, das im desaktivierten Zustand gemeinsam mit dem Airbag (3) bzw. den Airbags in dem Dachrahmen- und/oder Fenstersäulenbereich (1) untergebracht ist, und durch das der Airbag (3) bzw. die Airbags zum Zwecke der Aktivierung vor und/oder während der Befüllung aus seiner Ruhelage herausbewegbar ist.

12. Seitenairbagsystem nach Anspruch 11, **dadurch gekennzeichnet, dass** das Spanntuch (15') nach Art eins mit Gasdruck befüllbaren Sackes ausgebildet ist.

## Claims

1. Side airbag system for a motor vehicle, having at least one airbag (3a to 3e; 3) which is arranged in a region (1) of the roof frame and/or window pillar of the motor vehicle above a side window (2) and is accommodated there in a folded-together fashion in the deactivated state and, in the activated state, extends in front of the side window (2) as a cover starting from the region (1) of the roof frame and/or the window pillar, and which has at a, seen in cross section through the airbag, in an edge region assigned to the region (1) of the roof frame, which edge region extends away from the side window (2) in the transverse direction of the vehicle into the interior of the vehicle, an attachment (10) for covering the region (1) of the roof frame or from retaining and operating elements (11) arranged at the region (1) of the roof frame and/or window pillar and protruding into the vehicle interior, the end region of the edge region facing the interior of the vehicle, seen at a in cross section through the airbag, being formed as the attachment (10), **characterized in that**, in the inflated state, the at least one airbag (3a to 3e; 3) is formed, seen in cross section through the airbag, wider in the edge region assigned to the region (1) of the roof frame, in the region of the retaining and operating elements (11), than in the region of the airbag adjoining it inwards away from the edge region, and **in that** at this edge region, formed wider, seen in cross section through the airbag, of the at least one airbag (3), or in the case of a plurality of airbags on predetermined airbags (3c, 3d), protruding retaining and operating elements are covered by the attachment (10) formed in the shape of a bead and introduced into the airbag.

2. Side airbag system for a motor vehicle according to Claim 1, **characterized in that**, in the activated state, the airbag (3c, 3d; 3) in the region where it widens at the edge engages together with the attachment (10) in an approximately U-shaped manner around the region (1) of the roof frame and/or window pillar.

3. Side airbag system according to Claim 1 or Claim 2, **characterized in that**, in the activated state, the attachment (10) runs approximately parallel to the wall region of the assigned region (1) of the roof frame and/or window pillar, thereby forming a channel-shaped intermediate space between the region (1) of the roof frame and/or window pillar and the attachment (10), in which the retaining and operating elements (11) are arranged on the roof frame and/or window pillar side.

4. Side airbag system according to one of Claims 1 to 3, **characterized in that** the airbag (3) is formed as a single-chamber airbag with a continuous attachment (10).

5. Side airbag system according to one of Claims 1 to 4, **characterized in that** a plurality of joined-together airbags (3a to 3e) are provided as airbag chambers, an attachment (10) being formed on at least one of the airbags (3c, 3d).

6. Side airbag system according to one of Claims 1 to 5, **characterized in that**, in the inflated state, the at least one airbag (3a to 3e) is aligned approximately vertically and an airbag (3a) arranged in front of the window pillar is connected to the latter via a guide (8a) in the manner of a roller guide (8a; 9), cord guide or retaining-band guide (15).

7. Side airbag system according to one of Claims 1 to 6, **characterized in that** individual chambers of the airbag (3) or the airbags (3a to 3e) are in each case directly connected via a valve (6; 6.1, 6.2) to a gas duct (5), which is arranged in the region (1) of the roof frame or window pillar and can be blown into by at least one gas generator (7), and can be filled with gas, and **in that** the valves (6; 6.1, 6.2) are connected to an electronic control unit (12) and are controllable by the latter independently of one another.

8. Side airbag system according to Claim 7, **characterized in that** the valves (6; 6.1, 6.2) are precontrollable nonreturn valves.

9. Side airbag system according to Claim 7 or Claim 8, **characterized in that** a gas duct (5) is arranged fixedly in the region (1) of the roof frame and/or window pillar.

10. Side airbag system according to Claim 9, **characterized in that**, in the deactivated state, the at least one airbag (3a to 3e) lies in a folded-together fashion in an accommodating space on the roof frame and/or window pillar side, which is covered by means of a panelling part (13), which has a predetermined breaking area (13a) in such a way that the predetermined breaking area (13a) can be torn open by the inflating airbag (3a to 3e) for the release of an airbag outlet opening.

11. Side airbag system according to one of Claims 1 to 10, **characterized in that** the airbag or airbags (3) are operatively connected to a stretched-out cloth (15') which, in the deactivated state, is accommodated together with the airbag (3) or airbags in the region (1) of the roof frame and/or window pillar, and by which the airbag (3) or airbags can be moved out of its position of rest for the purpose of activation before and/or during filling.

12. Side airbag system according to Claim 11, **characterized in that** the stretched-out cloth (15') is designed in the manner of a bag which can be filled with gas pressure.

## Revendications

1. Système d'airbag latéral pour un véhicule automobile comprenant au moins un airbag (3a à 3e ; 3) disposé dans une région du cadre de toit et/ou dans une région d'un montant de fenêtre (1) du véhicule automobile au-dessus d'une fenêtre latérale (2) et monté de manière repliée dans l'état désactivé, qui s'étend, dans l'état activé, sous forme de recouvrement partant de la région du cadre de toit et/ou de la région du montant de fenêtre (1) devant la fenêtre latérale (2) et qui présente, au niveau d'une région de bord associée à la région de cadre de toit (1), vue en section transversale à travers l'airbag, qui s'étend depuis la fenêtre latérale (2) dans la direction transversale du véhicule à l'intérieur de l'habitacle du véhicule, une avancée (10) pour recouvrir la région du cadre de toit (1) ou des éléments de fixation et de commande (11) disposés sur la région de cadre de toit et/ou la région du montant de fenêtre (1) et saillant à l'intérieur du véhicule, la région d'extrémité de la région de bord tournée vers l'habitacle du véhicule, vue en section transversale à travers l'airbag, étant réalisée sous forme d'avancée (10),
**caractérisé en ce que**
l'au moins un airbag (3a à 3e ; 3) dans l'état gonflé, vu en section transversale à travers l'airbag, dans la région de bord associée à la région de cadre de toit (1), est réalisé plus large dans la région des éléments de fixation et de commande (11) que dans la région d'airbag s'y raccordant depuis la région de bord vers l'intérieur, et **en ce que**
sur cette région de bord réalisée plus large, vue en section transversale à travers l'airbag, de l'au moins un airbag (3) ou dans le cas de plusieurs airbags, sur des airbags prédéterminés (3c, 3d), des éléments de fixation et de commande saillants sont recouverts par l'avancée (10) réalisée en forme de boudin intégré dans l'airbag.

2. Système d'airbag latéral pour un véhicule automobile selon la revendication 1, **caractérisé en ce que** l'airbag (3c, 3d ; 3) dans la région de l'élargissement de l'airbag du côté du bord vient en prise conjointement avec l'avancée (10) dans l'état activé tout autour de la région du cadre de toit et/ou du montant de fenêtre (1) suivant une forme approximativement en U.

3. Système d'airbag latéral selon la revendication 1 ou la revendication 2, **caractérisé en ce que** l'avancée (10) dans l'état activé s'étend approximativement parallèlement à la région de paroi de la région de cadre de toit et/ou de montant de fenêtre (1) associée en formant un espace intermédiaire en forme de canal entre la région de cadre de toit et/ou de montant de fenêtre (1) et l'avancée (10), dans lequel sont disposés, du côté du cadre de toit et/ou du montant de fenêtre, les éléments de fixation et de commande (11).

4. Système d'airbag latéral selon l'une quelconque des revendications 1 à 3, **caractérisé en ce que** l'airbag (3) est réalisé sous la forme d'un airbag à chambre unique avec une avancée continue (10).

5. Système d'airbag latéral selon l'une quelconque des revendications 1 à 4, **caractérisé en ce que** plusieurs airbags contigus (3a à 3e) sont prévus sous forme de chambres d'airbags, une avancée (10) étant réalisée sur au moins un des airbags (3c, 3d).

6. Système d'airbag latéral selon l'une quelconque des revendications 1 à 5, **caractérisé en ce que** l'au moins un airbag (3a à 3e) dans l'état gonflé est orienté approximativement verticalement et un airbag (3a) disposé devant le montant de fenêtre est connecté à celui-ci par le biais d'un guidage (8a) à la manière d'un guidage à rouleaux (8a ; 9), d'un guidage de câble ou d'un guidage à bande de support (15).

7. Système d'airbag latéral selon l'une quelconque des revendications 1 à 6, **caractérisé en ce que** des chambres individuelles de l'airbag (3) ou les airbags (3a à 3e) sont connectés respectivement par le biais d'une soupape (6 ; 6.1, 6.2) directement à un conduit de guidage de gaz (5) disposé dans la région de cadre de toit ou de montant de fenêtre (1) et pouvant être insufflé par au moins un générateur de gaz (7) et peuvent être remplis de gaz, et
**en ce que** les soupapes (6 ; 6.1, 6.2) sont raccordées à une unité de commande électronique (12) et peuvent être commandées indépendamment les unes des autres par celle-ci.

8. Système d'airbag latéral selon la revendication 7, **caractérisé en ce que** les soupapes (6 ; 6.1, 6.2) sont des soupapes anti-retour précommandables.

9. Système d'airbag latéral selon la revendication 7 ou la revendication 8, **caractérisé en ce qu'**un conduit de guidage de gaz (5) est disposé fixement dans la région du cadre de toit et/ou du montant de fenêtre (1).

10. Système d'airbag latéral selon la revendication 9, **caractérisé en ce que** l'au moins un airbag (3a à 3e) dans l'état désactivé est logé à l'état replié dans un espace de logement du côté du cadre de toit et/ou du montant de fenêtre, qui est recouvert au moyen d'une pièce d'habillage (13) qui présente une zone de rupture (13a) de telle sorte que la zone de rupture (13a) puisse être déchirée par l'airbag se gonflant (3a à 3e) pour libérer une ouverture de sortie d'airbag.

11. Système d'airbag latéral selon l'une quelconque des revendications 1 à 10, **caractérisé en ce que** le ou les airbags (3) sont en liaison coopérante avec un tissu tendeur (15') qui dans l'état désactivé est monté conjointement avec l'airbag (3) ou les airbags dans la région de cadre de toit et/ou de montant de fenêtre (1), et grâce auquel l'airbag (3) ou les airbags peuvent être sortis de leur position de repos avant et/ou pendant le remplissage en vue de leur activation.

12. Système d'airbag latéral selon la revendication 11, **caractérisé en ce que** le tissu tendeur (15') est réalisé à la manière d'un sac pouvant être rempli par un gaz sous pression.
